Europäisches Patentamt

European Patent Office

Office européen des brevets

(19)

(11) Publication number: **0 169 244 B1**

(12) **EUROPEAN PATENT SPECIFICATION**
**published in accordance with Art.**
**158(3) EPC**

(45) Date of publication of patent specification: **10.07.91** (51) Int. Cl.⁵: **G06F 13/00**, G06F 11/22, G06F 11/26

(21) Application number: **85900493.9**

(22) Date of filing: **27.12.84**

(86) International application number:
**PCT/JP84/00621**

(87) International publication number:
**WO 85/03151 (18.07.85 85/16)**

(54) **METHOD OF AND APPARATUS FOR DIAGNOSING CHANNEL CONTROL UNIT.**

(30) Priority: **30.12.83 JP 248218/83**

(43) Date of publication of application:
**29.01.86 Bulletin 86/05**

(45) Publication of the grant of the patent:
**10.07.91 Bulletin 91/28**

(84) Designated Contracting States:
**DE FR GB SE**

(56) References cited:
**FR-A- 2 290 708**
**JP-A- 5 099 649**
**JP-A- 5 518 778**
**JP-A- 5 627 427**
**US-A- 3 710 350**

**IBM TECHNICAL DISCLOSURE BULLETIN, vol.**
**15, no. 12, May 1973, page 3772, New York,**
**US; W.N. ANDERSEN et al.: "Diagnostics us-**
**ing pseudo devices"**

(73) Proprietor: **FUJITSU LIMITED**
**1015, Kamikodanaka Nakahara-ku**
**Kawasaki-shi Kanagawa 211(JP)**

(72) Inventor: **OGASAWARA, Yasuo**
**Zamahaitsu 4-1123 2923-7, Iriya 4-chome**
**Zama-shi Kanagawa 228(JP)**

(74) Representative: **Eitle, Werner, Dipl.-Ing. et al**
**Hoffmann, Eitle & Partner Patentanwälte Ar-**
**abellastrasse 4**
**W-8000 München 81(DE)**

## Description

### TECHNICAL FIELD

The present invention relates to a diagnostic method and apparatus for channel control apparatus which controls input and output units, depending on the commands sent from the central processing unit, through input and output control units (magnetic tape control unit, file control unit, interface control unit, etc.) connected to the common bus in accordance with predetermined interface control procedures and particularly to a diagnostic method and apparatus for channel control apparatus which can easily separate a defective part and improve diagnostic performance by providing a pseudo-input/output control unit which can simulate operations of input and output control units in the channel control unit.

### BACKGROUND ART

A channel control apparatus controls a variety of input and output control units through the common bus. For example, in a system where the central control unit, a main memory unit and a channel control unit are connected to a multi-path, the input and output control units are connected in series through the channel control unit and common bus, and the input and output units such as a printer and a magnetic take unit are connected to each input/output control unit, the channel control unit controls the input/ output units through the input/output control unit connected to the common bus depending on the commands sent from the central control unit, and the data transfer control is carried out in the program control mode and direct memory access transfer mode, etc.

Here, in said program control mode, data transfer is carried out by controlling the input/output control unit under the condition that the channel control unit is connected to the central control unit, while in said direct memory access transfer mode, data transfer is carried out by making an access directly to the main memory unit under the condition that the channel control unit is connected to the main memory unit.

When the central control unit detects a failure, a diagnostic operation is carried out in order to detect a defective unit, but since the input/output control unit connected to the channel control unit through the common bus has the structure corresponding to respective input/ output units, the diagnostic method and procedures corresponding to such structure are necessary and therefore many test data for diagnosis must be prepared and such data must also be selected corresponding to a kind of the input/ output units.

Moreover, if a failure occurs in the common bus continuously due to a failure of driver of input/output control unit connected to the common bus, it is no longer possible to realize the diagnostic procedures by opeating the input/ output control unit.

As explained above, since the channel control unit of the prior art is mainly composed of a data transfer circuit and a control circuit, there arises a disadvantage that diagnosis is carried out by operating the input/output control unit and thereby the diagnostic program is complicated and it is very difficult to separate a defective unit connected in series through the common bus CB.

### DISCLOSURE OF THE INVENTION

It is an object of the present invention to provide a diagnostic method for detecting whether the common bus interface of channel control unit is normal or not by providing a pseudo-input/output control unit which can simulate the operations of input/output control unit within the channel control unit and separating a plurality of and different kinds of input/output control units connected in series through the common bus from the channel control unit.

It is another object of the present invention to realize diagnosis for failure detecting function in the channel control unit by sending parity error data and executing abnormal operations such as common bus time-out, etc. in accordance with the instruction of program in said pseudo input/output control unit.

It is further object of the present invention to provide a method of high speed diagnosis for the common controller of a plurality of input/output control units, namely, the channel control unit in view of enhancing the system reliability.

JP-A-56-27427 describes a selector channel which is connected to an input/output unit by way of an input/output bus. The selector channel includes a simulator for function diagnosis and simulation. Each status request signal, data available signal and data request signal supplied from a microprocessor in the selector channel is diagnosed in said simulator.

The objects of the present invention are solved by an automatic diagnostic method for a plurality of channel control units, each channel control unit controlling at least one input/output unit through an input/output control unit which is connected in series to said channel control unit by a common bus, said input/output control unit being controlled in accordance with predetermined common bus control procedures by receiving a command from a central control unit **characterized** by a pseudo-input/output control unit within each channel control unit being automatically connected to said common bus in cases where the central control unit detects a failure within said channel control unit or within the appropriate input/output control units; by automatic diagnostic procedures being carried out for each of the individual kinds of input/output control units using the pseudo-input/output control unit for simulating operations of the appropriate input/output control units; by informing the central control unit in the case where normal function of the channel control unit is detected, and by designating the channel control unit to be repaired in the case where abnormal function of the channel control unit is detected.

The object of the present invention is also solved by a channel control unit for controlling at least one input/output control unit which is connected in series to said channel control unit by a common bus, said input/output control units being controlled in accordance with predetermined common bus control procedures by receiving a command from a central control unit, **characterized** by a pseudo-input/output control unit within each channel control unit being automatically connected to said common bus in cases where the central control unit detects a failure within said channel control unit or within the appropriate input/output control units;by means for carrying out automatic diagnostic procedures being carried out for each of the individual kinds of input/output control units using the pseudo-input/output control unit for simulating operations of the appropriate input/output control units; by means for informing the central control unit in the case where normal function of the channel control unit is detected, and by means for designating the channel control unit to be repaired in the case where abnormal function of the channel control unit is detected.

According to the present invention, a defective unit can be separated in both channel control unit and input/ output control unit by providing a pseudo-input/output control unit which can simulate the operations of different kinds of input/output control units and an input/output unit within the channel control unit.

Moreover, diagnosis of channel control unit can be realized without relation to the input/output control units and input/output units to be connected.

Accordingly, the present invention provides a very economical diagnostic procedure which is capable of curtailing a failure repair time and realising individual diagnosis of the channel control unit.

BRIEF DESCRIPTION OF DRAWINGS

Fig. 1 is a block diagram of essential part of a data processing system to which the present invention is applied.

Fig. 2 is the connecting conditions of channel control unit to the central control unit to which the present invention is applied.

Fig. 3 is a structure of the channel control unit to which the present invention is applied.

Fig. 4 is a structure of pseudo-input/output control unit and pseudo-input/output unit in the channel control unit to which the present invention is applied.

Fig. 5 is a structure of an address selection circuit within pseudo-input/output control unit and pseudo-input/ output unit to which the present invention is applied.

Fig. 6 is a flow chart of diagnostic procedure for the channel control unit to which the present invention is applied.

BEST MODE OF CARRYING OUT THE INVENTION

The preferred embodiment of the present invention is explained with reference to the accompanying drawings.

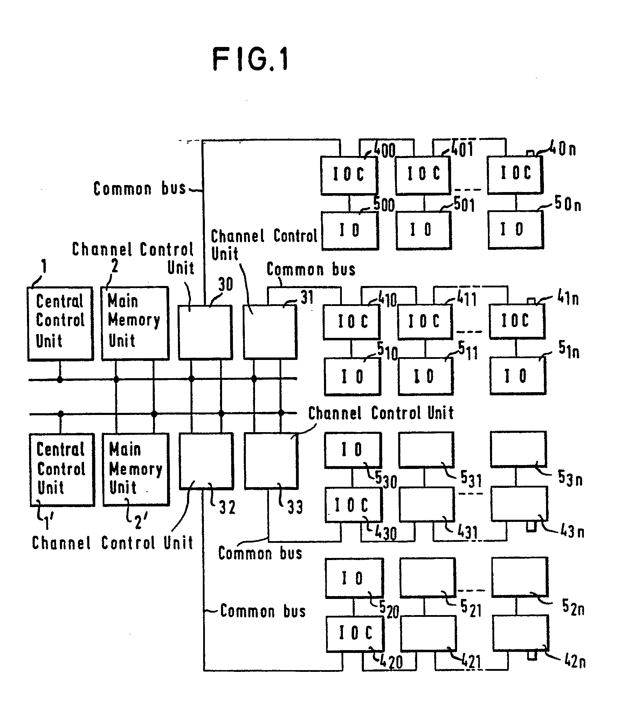

Fig. 1 shows a structure of data processing system in which 1, 1' are central control units(CC), 2, 2' are main memory units(MM), $3_0 \sim 3_3$ are channel control units (CHC), $4_{00} \sim 4_{3n}$ are input/output control units, $5_{00} \sim 5_{3n}$ are input/output units.

In this figure, the central control units 1, 1' and the main memory units 2, 2' are perfectly duplicated.

Namely, the central control unit 1 and main memory unit 2 form the regular system while the central control unit 1' and the main memory unit 2' form the standby system.

In the data processing system where the central control units 1, 1', main memory units 2, 2' and channel control units $3_0 \sim 3_3$ are connected to the multi-bus, the input/output control units $4_{00} \sim 4_{3n}$ are connected in series through the channel control units $3_0 \sim 3_3$ and the common bus and the input/output units $5_{00} \sim 5_{3n}$ such as a printer and a magnetic tape unit, etc. are connected to the input/output control units $4_{00} \sim 4_{3n}$, the channel control units $3_0 \sim 3_3$ controls the input/output units $5_{00} \sim 5_{3n}$ through the input/output control units $4_{00} \sim 4_{3n}$ connected to the common bus in accordance with the commands sent from the central control unit 1,1' in order to transfer the data in the program control mode and direct memory access transfer mode, etc.

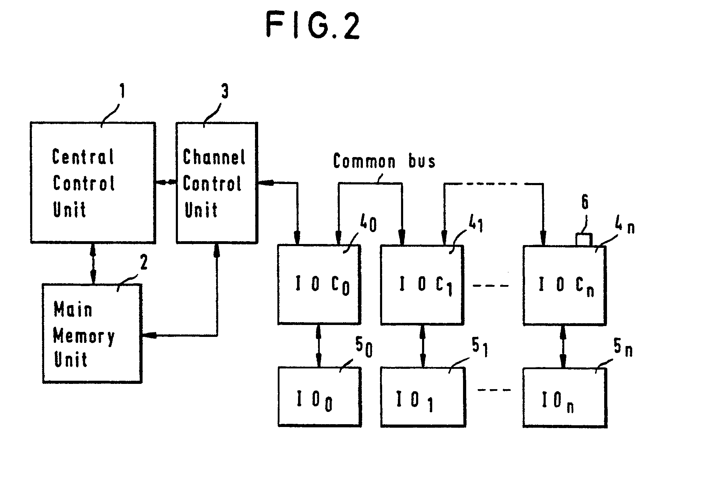

Fig. 2 shows connection between the central control unit 1, main memory unit 2 and channel control unit 3. In this figure, a plurality of input/output control units $4_0$, $4_1$, ....., $4_n$ are connected in series to the channel control unit 3 through the common bus and the last input/ output control unit $4_n$ is not connected with the input/ output control unit bus connected with ε termination resistor 6.

Each of the input/output control units $4_0$, $4_1$, ....., $4_n$ is respectively connected with the input/output units $5_0$, $5_1$, ......, $5_n$. The channel control unit 3 controls the input/output control units $4_0$, $4_1$, ....., $4_n$ in the program control mode where it is connected to the central control unit 1, and executes data transfer by direct access to the main memory unit 2 in the direct memory access transfer mode under the condition that it is connected to the main memory unit 2.

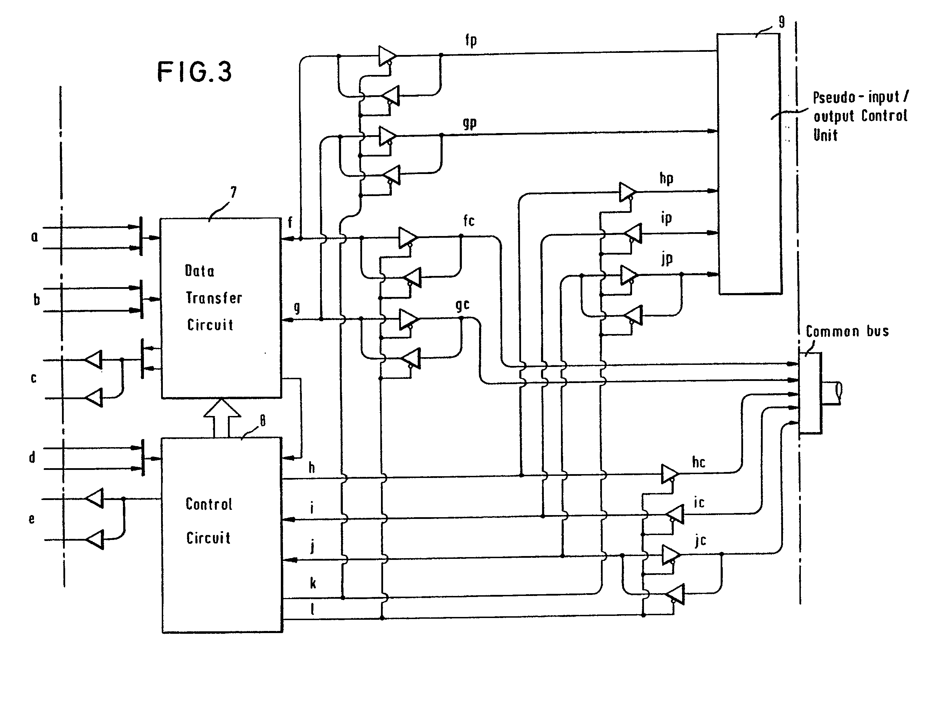

Fig. 3 is an embodiment of the channel control unit 3 to which the present invention is applied. 7 is a data transfer circuit which performs transmission and reception of data through common bus, transmission and reception of address signal and transmission of clear signal,etc.

8 is a control circuit which performs transmission and reception of control signal through the common bus.

9 is a pseudo-input/output control unit which artificially controls input and output for diagnosis for executing internal diagnosis of channel control unit (CC) 3, and diagnosis of interface between CC and memory and the common bus interface.

The terminals a, b, c, d and e are connected to said multi-bus. The address signal of input/output control unit and command sent from the central control unit 1,1' are transferred to the terminal a, while the data sent from the main memory unit to the terminal b.

Moreover, the stored data and address signal are sent to the main memory unit from the terminal c.

A control signal is transferred to the terminal d from the central processing unit, and various kinds of control signals are sent to the central processing unit from the terminal e.

Next, the common bus interface signal line within the channel control unit is explained.

f(fp, fc) is both-way data line including the parity check bit line.

g(gp, gc) is both-way address line including the signal lines for expanded addresses.

h(hp, hc) includes a signal as the answer signal when an interrup request is accepted at the central control unit, an address information to be sent to the unit to which the central control unit requests an interrupt, a system reset signal and an answer signal for the request of obtaining the right of using the common bus.

i(ip, ic) includes a request signal for the input/output control unit to obtain the right of using the bus, a signal for each input/output control unit to request the interrupt to the central control unit, an answer signal for indicating acquisition of the right of using the next bus, and an answer signal indicating that the interrupt has been accepted.

j(jp, jc) includes a signal for the central control unit to designate the direction of data transfer to the input/output control unit, a signal for indicating that the unit of data transfer is word or byte, a signal indicating that the parity bit is effective or not, and a signal for requesting transmission or reception of data for the data tranfer.

These common bus interfaces are generally established in the ordinary data processing system of this type.

The information lines K and $l$ are newly added in the present invention. K is a holding signal line for holding the pseudo-input/output control unit 9, while $l$ is a holding line for holding the common bus.

Namely, in case this channel control unit is used under the ordinary condition (it is connected to a plurality of different kinds of input/output control units through the common bus), a holding signal of the pseudo-input/output control unit 9 is transmitted to the line K and the pseudo-input/output control unit 9 is separated from said various kinds of common bus interface lines.

In the case of making diagnosis to the common bus interface of channel control unit, a control signal is applied to the terminal d from the central processing unit upon start of diagnostic execution program of central control unit, and moreover a common bus holding signal is sent to the information line $l$ through the control unit 8 and thereby the common bus extending from the channel control unit is disconnected.

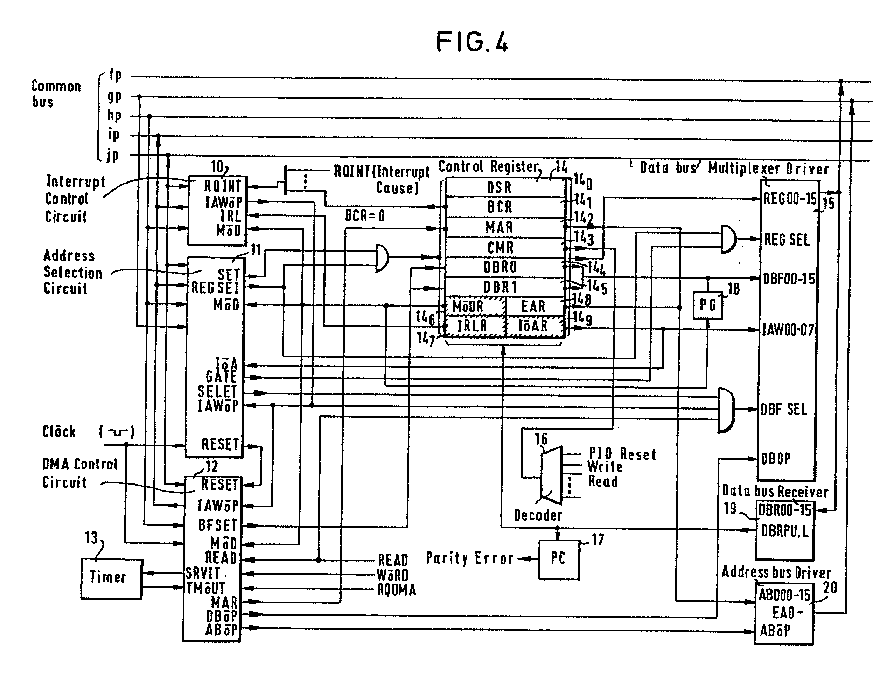

Fig. 4 is a structure of a pseudo-input/output control unit shown in Fig. 3, in which 10 is an interrupt control circuit, 11 is an address selection circuit, 12 is a direct memory access (DMA) control circuit, 13 is a timer, 14 is a control register, 15 is a data bus multiplexer driver, 16 is a command decoder, 17 is a parity check circuit, 18 is a parity generator, 19 is a data bus receiver, 20 is an address bus driver.

When the address signal and control signal (write or read instruction) of this pseudo-input/output control unit are transmitted through gp, jp signal lines from the central control unit, these are sensed by the address selection circuit 11.

(I) Operations by program control mode are explained hereunder.

1 Writing to control register 14 (program control mode)

The address selection circuit 11 compares the address signal with the intrinsic address assigned to the pseudo-input/ouptut control unit or with the address preset to IOAR 149. When said address matches any of those exlained above, the address selection circuit 11 transmits a write setting signal (SET) of control register 14 and the register selection signal (REG SEL) to the control register 14 assigned by the address, and it also selects a desired register among various registers 140~149 of the control register 14.

Meanwhile, the data information (including parity bit) is sent to the data bus receiver 19 through the Fp signal line and information is written into the selected register among the control registers 14 through the parity check circuit 17.

140 is a device status register (DSR) which designates time-out information, data error information and end information.

141 is a byte counter register (BCR) which designates a number of bytes of data to be transmitted.

142 is a memory address register (MAR) which indicates an object address of data to be transmitted.

143 is a command register (CMR) which receives a command sent from CC, reads it to the memory by the operation of the pseudo-input/output unit itself and designates the DMA control operation such as designating of data writing.

144, 145 are data buffer regiters (DBR0, 1) which temporarily accummulates the write data sent from the channel control unit and sends the content to the data bus when the read command is issued from the channel control unit.

146 is a mode register (MODR) which designates the pseudo normal mode or operation mode of byte or word.

147 is an interrupt level registe (IRLR) which designates different interrupt level of each input/output control unit.

148 is an expansion memory address register (EAR) designates expansion address of expansion memory.

149 is an input/output unit address register which designates address of input/output control unit for selecting individual address of said input/output control unit.

2 Reading from control register 14 (program control mode)

The address selection circuit sends the read setting signal (SET) of control register 14 and the register selection signal (REG SEL) and selects a desired register among various registers 140~149 in the control register 14.

The address selection circuit further sends a gate signal (GATE) for reading the register and sends a selection gate signal to the register selection terminal (REG SEL) of data bus multiplexer driver 15.

The information of designated register in the control register 14 which is designated to be read is fetched to the data bus multiplexer driver 15 and is then sent to the main memory unit through the fp line.

(II) Operations by direct memory access tansfer mode are explained hereunder.

1 Writing to the data buffer registers 144, 155 in the direct memory access transfer mode

The pseudo-input/output unit is given at the control register 14 by the program control mode as the dependent unit of the channel control unit and starts the direct memory access transfer mode (self-standing operation) when the start bit of command register 143 is turned ON.

The information of command register 143 translates the command information in the command decoder 16 and thereby the DMA start request signal (RQDMA) and the write command signal (WRITE) are sent to the DMA control circuit 12.

Meanwhile, the address information of memory address register 142, namley the address information of main memory unit is sent to the address bus driver 20 and is then sent to the main memory unit through the gp signal line.

The DMA control circuit 12 sends the signal (BFSET) for fetching the data sent from the main memory unit to the data buffer registers 144, 145.

Data is sent to the data bus receiver 19 through the fp line from the main memory unit. After parity check at the parity check circuit 17, data is written to the data buffer registers 144, 145.

Since data is set in the plurality of address regions main memory unit during operation in the direct access transfer mode, data is written into the data buffer registers 144, 145, while the address of memory address register 142 is renewed with increment of one by one.

The MA + 1 terminal of the DMA control circuit 12 sends this address renewal information.

In the byte counter register 141, one is decremented for each end of transfer and the transfer terminates when the count value written in the byte counter register becomes zero.

The interrupt control circuit 10 receives the interrupt request signal (RQINT) to the central control unit as the signal for informing the end of operation when the DMA transfer is terminated or time-out failure is detected and sends it through the ip signal line.

The interrupt level register 147 and input/output unit address regiter 149 send the interrupt level data and pertinent input/output unit number to the terminals IAW 00~07 of the data bus multiplexer driver 15 and also send the information of device status register 140 to the central control unit through the fp line.

IAWOP in the interrupt control circuit 10 is the terminal for the signal which opens the sending gate of interrupt address word, IRL is the interrupt level setting signal terminal and MOD is the operation mode designation terminal.

Moreover, IOA of the address selection circuit 11 is input terminal of address information of the input/output unit, SELECT is selection signal terminal of data buffer registers 144, 145, and RESET is the reset terminal of DMA control circuit 12.

DBOP of the DNA control circuit 12 is a terminal of signal for opening the data sending gate of data bus multiplexer driver 15, ABOP is terminal of signal for opening the gate for sending address infomation of address bus driver 20.

2 Reading from data buffer registers 144, 145 in the direct memory access transfer mode

The channel control unit starts the direct memory access transfr mode (self-standing operation) with the start bit of the command register 143 in the pseudo input/ output control unit.

Information of command register 143 translates the command information in the command decoder 16 and sends the DMA start request signal (RQDMA), read command (READ) and transfer unit designation (WORD) signal to the DNA control circuit 12.

Meanwhile, the address information of memory address register 142, namely the address information of main memory unit as the destination of transfer is sent to the address bus driver 20 and then sent to the main memory unit through the gp signal line.

The DMA control circuit 12 sends the signal (DBOP) for opening the gate for sending the data.

Data of data buffer registers 144, 145 is sent to the main memory unit through the data bus multiplexer driver 15 and the fp line.

As in the case of the writing operation explained in the paragraph 1 , data of data buffer registers 144, 145 is also read in this read operation while the address of memory address register 142 is renewed with increment of plus one ( + 1).

When read transfer to the main memory unit is completed, the byte counter register 141 sends the interrupt request signal (RQINT) to the interrupt control circuit 10 and said interrupt control circuit 10 sends further the interrupt request signal to the central control unit through the ip signal line.

The interrupt level register 147 and input/output unit address register 149 send the interrupt level information and pertinent input/output unit number to the terminals IAW $_{00}$ ₋ $_{07}$ of the data bus multiplexer driver 15 and also send the information of device status register 140 to the central control unit through the fp line.

The ordinary diagnostic function of the pseudo-input/ output control unit has been explained above but the pseudo-input/output control unit of the present invention is characterized by that a mode register 146, an interrupt level register 147 and an input/output unit address register 149 are newly provided to an ordinary input/output control unit.

Since it is also possible to simulate the pseudo-normal operation by sending various kinds of defective signals by setting the mode register 146 to pseudo-normal operation mode, failure of input/otput control unit connected to the common bus can be detected easily.

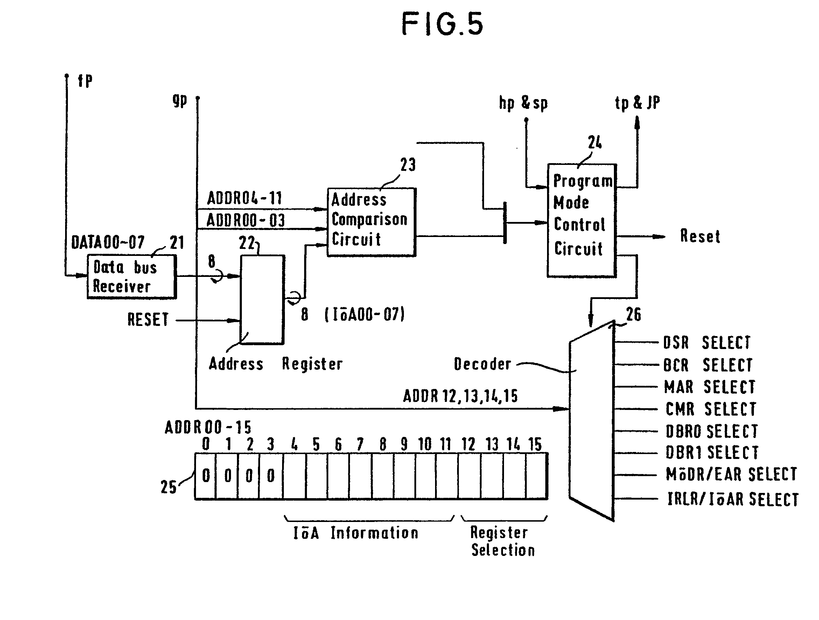

Fig. 5 shows an embodiment of address selection circuit 11 shown in Fig. 4.

22 is an input/output control unit address register and a variable register intrinsic to this pseudo-input/ output control unit.

This input/output control unit address register 22 can simulate the intrinsic address of each input/output unit (input/output control unit) owing to the variable function.

The address information of input/output apparatus is previously written in the variable register 22 through the fp line.

Meanwhile,the address information sent through the gp signal line is compared with the input/output unit address information(IOA) in the address comparison circuit 23.

When they match, the program mode control circuit 24 is started and moreover the register selection circuit 26 is set.

25 is an address information sent through the gp signal line.

The input/output unit address information (IOA) is intrinsic in each input/output unit (input/output control unit) but the pseudo-input/output control unit by the present invention is variable.

The intrinsic address of each input/output control unit can be simulated by providing the variable input/output unit address.

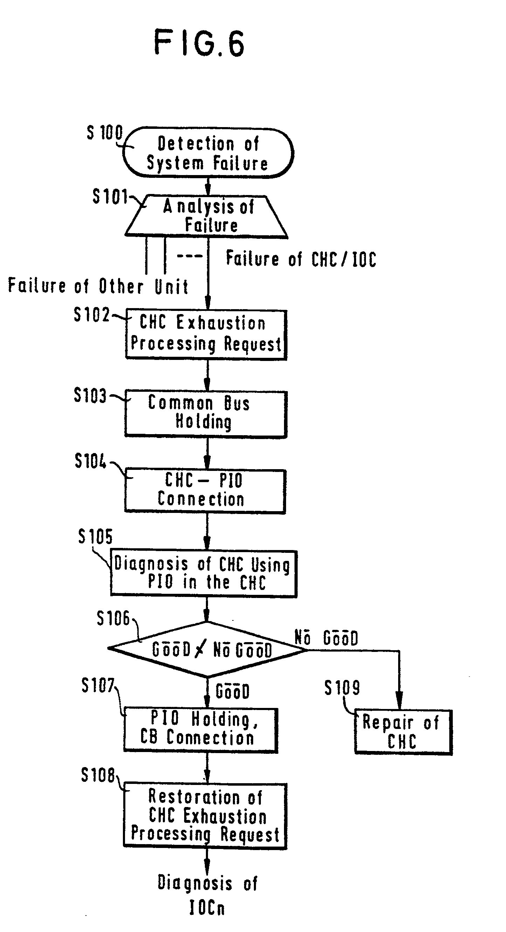

Fig. 6 is a flow chart of diagnostic procedures for channel control unit of the present invention.

First, in the step S100, the central control unit detects the system failure.

In the step S101, the central control unit analyzes a failure and the procedure proceeds to the step S102 in case a failure relates to the channel control unit and input/ output control unit.

In the step S102, the exhaustion processing request at the channel control unit, namely the termination processing of channel control unit under the operation is carried out.

In the step S103, the common bus is held.

Existingly, it has been impossible to hold the common bus and therefore, it has also been impossible to detect the failure occurring in any of the channel control unit or or various kinds of input/output control unit.

Next, the channel control unit and the pseudo input/ output unit are connected in the step S104.

In the step S105, diagnostic procedures are taken for the channel control unit using the pseudo input/output control unit in the channel control unit.

In the step S106, the central control unit sends the diagnostic order, reads the result of diagnosis, compares it with the good inforamtion and judges whether it is good or no good.

In case the result is proved to be good by judgement, the pseudo-input/output control unit is held in the step 107 and holding condition of common bus is restored.

On the other hand, in case the result is proved to be no good, procedure moves to the step S109 and the channel control unit (CHC) is repaired.

When result of judgment in the step S106 is good, it means the common bus interface of channel control unit is good and it is proved that a cause of system failure lies in the input/output control unit or input/output unit connected to the channel control unit through the common bus.

In the step S108, the exhaustion processing request of the channel control unit (CHC) is restored, namely the processing for realizing operations of input/output control unit connected to the channel control unit is carried out.

As the next step, various kinds of actual input/output control units connected from the channel control unit through the common bus are designated and the diagnostic procedures corresponding to such structure are sequentially carried out.

As explained above, the present invention provides the pseudo-input/output control and the input/output unit which can simulate the operation of input/output control unit within the channel control unit. This pseudo-input/ output control unit can be formed with an integrated circuit and the channel control unit can be formed in small size. In case the pseudo-input/output control unit is provided to the common bus, there arises problems of restriction in length of common bus and separation of common bus but provisin of such pseudo-input/output control unit in the channel control unit like the present invention results in the advantage that the common bus can be separated easily.

Moreover, since it is also possible to simulate pseudo-normal operation, the failure detecting function of any input/output control unit connected to the common bus can easily be diagnosed.

Moreover, since the diagnostic test data can be fixed because the diagnostic procedures are taken during operation of the pseudo-input/output control unit, and thereby the channel control unit can be diagnosed easily at a high speed even in case various kinds of input/output control units are connected to the common bus.

List of Reference Numbers

| | |
|---|---|
| 1, 1' | central control unit |
| 2, 2' | main memory unit |
| $3_0$ $3_3$ | channel control unit |
| $4_{00}$ $4_{3n}$ | input/output control unit |
| $5_{00}$ $5_{3n}$ | input/output unit |
| 6 | termination resistance |
| 7 | data transfer circuit |
| 8 | control circuit |
| 9 | pseudo-input/output control unit |
| 10 | interrupt control circuit |
| 11 | address selection circuit |
| 12 | DMA control circuit |
| 13 | timer |
| 14 | control register |
| 15 | data bus multiplexer driver |
| 16 | decoder |
| 17 | parity check circuit |
| 18 | parity generator |
| 19 | data bus receiver |
| 20 | address bus driver |
| 21 | data bus receiver |
| 22 | address register |
| 23 | address comparison circuit |
| 24 | program mode control circuit |
| 25 | address information |
| 26 | decoder |

## Claims

1. An automatic diagnostic method for a plurality of channel control units (30-33), each channel control unit (30-33) controlling at least one input/output unit ($5_{00}$,..., $5_{3n}$) through an input/output control unit ($4_{00}$, ..., $4_{3n}$) which is connected in series to said channel control unit by a common bus, said input/output control unit ($4_{00}$,...,$4_{3n}$) being controlled in accordance with predetermined common bus control procedures by receiving a command from a central control unit (1),
   **characterized** by
   - a pseudo-input/output control unit (9) within each channel control unit (30-33) being automatically connected to said common bus in cases where the central control unit (1) detects a failure within said channel control unit (30-33) or within the appropriate input/output control units ($4_{00}$, ...,$4_{3n}$);
   - by automatic diagnostic procedures being carried out for each of the individual kinds of input/output control units ($4_{00}$, ..., $4_{3n}$) using the pseudo-input/output control unit (9) for simulating operations of the appropriate input/output control units ($4_{00}$, ..., $4_{3n}$);

- by informing the central control unit (1) in the case where normal function of the channel control unit (30-33) is detected, and

- by designating the channel control unit (30-33) to be repaired in the case where abnormal function of the channel control unit (30-33) is detected.

2. An automatic diagnostic method for a channel control unit according to claim 1 wherein said pseudo-input/output control unit (9) is automatically disconnected/connected by an automatic disconnection/connection means in accordance with a command of said central control unit (1).

3. A automatic diagnostic method for a channel control unit according to claim 1 wherein an individual address of each input/output control unit (4) is set to the desired address by said pseudo-input/output control unit (9) according to the receipt of a command from said central control unit (1).

4. An automatic diagnostic method for a channel control unit according to claim 1 wherein an interrupt level to the central control unit (1) is set by said pseudo-input/output control unit (9) to an individual interruption level which is assigned in each input/output control unit (4) according to a command from said central control unit (1).

5. An automatic diagnostic method for a channel control unit according to claim 1 wherein a parity error data is sent by said pseudo-input/output control unit (9) in accordance with a command from said central control unit (1) and simulates the operation for a common bus occupation time-out.

6. A channel control unit (30-33) for controlling at least one input/output control unit ($4_{00}$,-----,$4_{3n}$) which is connected in series to said channel control unit (30-33) by a common bus, said input/output control units ($4_{00}$-----,$4_{3n}$) being controlled in accordance with predetermined common bus control procedures by receiving a command from a central control unit (1), **characterized** by

a pseudo-input/output control unit (9) within each channel control unit (30-33) being automatically connected to said common bus in cases where the central control unit (1) detects a failure within said channel control unit (30-33) or within the appropriate input/output control units ($4_{00}$,-----,$4_{3n}$);

by means for carrying out automatic diagnostic procedures on each of the individual kinds of input/output control units ($4_{00}$,-----,$4_{3n}$) using the pseudo-input/output control unit (9) for simulating operations of the appropriate input/output control units ($4_{00}$,-----,$4_{3n}$);

by means for informing the central control unit (1) in the case where normal function of the channel control unit (30-33) is detected, and

by means for designating the channel control unit (30-33) to be repaired in the case where abnormal function of the channel control unit (30-33) is detected.

7. A channel control unit according to claim 6, wherein an automatic disconnection/connection means is provided in order to automatically disconnect/connect said common bus in accordance with a command of said central control unit (1).

8. A channel control unit according to claim 6, wherein said pseudo-input/output control unit (9) is capable of setting an individual address of each input/output control unit (4) to the desired address according to a command from said central control unit (1).

9. A channel control unit according to claim 6, wherein said pseudo-input/output control unit (9) is capable of setting an interrupt level to the central control unit (1) to the individual interruption level which is assigned in each input/output control unit (4) according to a command from said central control unit.

10. A channel control unit according to claim 6, wherein said pseudo-input/output control unit (9) is capable of sending a parity error data in accordance with a command from said central control unit (1) and simulating the operation for common bus occupation time-out.

**Revendications**

1. Procédé de diagnostic automatique pour une pluralité d'unités de commande de canal (30-33), chaque unité de commande de canal (30-33) commandant au moins une unité d'entrée/sortie ($5_{00}$,...,$5_{3n}$) par l'intermédiaire d'une unité de commande d'entrée/sortie ($4_{00}$,...,$4_{3n}$) qui est connectée en série à ladite unité de commande de canal au moyen d'un bus commun, ladite unité de commande d'entrée/sortie ($4_{00}$,...,$4_{3n}$) étant commandée en fonction de procédures prédéterminées de commande du bus commun par la réception d'une commande qui provient d'une unité de commande centrale (1), caractérisé par :

une pseudo-unité de commande d'entrée/sortie (9) à l'intérieur de chaque unité de commande de canal (30-33) qui est automatiquement connectée audit bus commun dans des cas où l'unité de commande centrale (1) détecte une défaillance à l'intérieur de ladite unité de commande de canal (30-33) ou à l'intérieur des unités de commande d'entrée/sortie appropriées ($4_{00}$,...,$4_{3n}$);

des procédures de diagnostic automatique qui sont mises en oeuvre pour chacune des catégories individuelles d'unités de commande d'entrée/sortie ($4_{00}$,...,$4_{3n}$) en utilisant la pseudo-unité de commande d'entrée/sortie (9) pour simuler des fonctionnements des unités de commande d'entrée/sortie appropriées ($4_{00}$,...,$4_{3n}$) ;

l'information de l'unité de commande centrale (1) dans le cas où un fonctionnement normal de l'unité de commande de canal (30-33) est détecté ; et

la désignation de l'unité de commande de canal (30-33) qui doit être réparée dans le cas où un fonctionnement anormal de l'unité de commande de canal (30-33) est détecté.

2. Procédé de diagnostic automatique pour une unité de commande de canal selon la revendication 1 dans lequel ladite pseudo-unité de commande d'entrée/sortie (9) est automatiquement déconnectée/connectée par un moyen de déconnexion/connexion automatique en fonction d'une commande de ladite unité de commande centrale (1).

3. Procédé de diagnostic automatique pour une unité de commande de canal selon la revendication 1 dans lequel une adresse individuelle de chaque unité de commande d'entrée/sortie (4) est établie à l'adresse souhaitée par ladite pseudo-unité de commande d'entrée/sortie (9) en fonction de la réception d'une commande qui provient de l'unité de commande centrale (1).

4. Procédé de diagnostic automatique pour une unité de commande de canal selon la revendication 1 dans lequel un niveau d'interruption pour l'unité de commande centrale (1) est établi par ladite pseudo-unité de commande d'entrée/sortie (9) à un niveau d'interruption individuelle qui est assigné à chaque unité de commande d'entrée/sortie (4) en fonction d'une commande qui provient de l'unité de commande centrale (1).

5. Procédé de diagnostic automatique pour une unité de commande de canal selon la revendication 1 dans lequel des données d'erreur de parité sont envoyées par ladite pseudo-unité de commande d'entrée/sortie (9) en fonction d'une commande qui provient de ladite unité de commande centrale (1) et simulent le fonctionnement pendant un délai d'attente d'occupation du bus commun.

6. Unité de commande de canal (30-33) pour commander au moins une unité de commande d'entrée/sortie ($4_{00}$,...,$4_{3n}$) qui est connectée en série à l'unité de commande de canal (30-33) au moyen d'un bus commun, ces unités de commande d'entrée/sortie ($4_{00}$,...,$4_{3n}$) étant commandées en fonction de procédures de commande prédéterminées du bus commun par la réception d'une commande qui provient d'une unité de commande centrale (1), caractérisée par :

une pseudo-unité de commande d'entrée/sortie (9) située à l'intérieur de chaque unité de commande de canal (30-33) qui est automatiquement connectée audit bus commun dans des cas où l'unité de commande centrale (1) détecte une défaillance à l'intérieur de ladite unité de commande de canal (30-33) ou à l'intérieur des unités de commande d'entrée/sortie appropriées ($4_{00}$,...,$4_{3n}$);

un moyen pour la mise en oeuvre de procédures de diagnostic automatique pour les catégories individuelles des unités de commande d'entrée/sortie ($4_{00}$,...,$3_{4n}$) en utilisant la pseudo-unité de commande d'entrée/sortie (9) pour simuler des fonctionnements des unités de commande d'entrée/sortie appropriées ($4_{00}$,...,$4_{3n}$);

un moyen pour informer l'unité de commande centrale (1) dans le cas où un fonctionnement normal de l'unité de commande de canal (30-33) est détecté ; et

un moyen pour désigner l'unité de commande de canal (30-33) qui doit être réparée dans le cas où un fonctionnement anormal de l'unité de commande de canal (30-33) est détecté.

7. Unité de commande de canal selon la revendication 6, dans laquelle un moyen de déconnexion/connexion automatique est prévu afin de déconnecter/connecter automatiquement ledit bus commun en fonction d'une commande de ladite unité de commande centrale (1).

8. Unité de commande de canal selon la revendication 6, dans laquelle ladite pseudo-unité d'entrée/sortie (9) peut établir une adresse individuelle de chaque unité de commande d'entrée/sortie (4) à l'adresse souhaitée en fonction d'une commande qui provient de ladite unité de commande centrale (1).

9. Unité de commande de canal selon la revendication 6, dans laquelle ladite pseudo-unité de commande d'entrée/sortie (9) peut établir un niveau d'interruption pour l'unité de commande centrale (1) au niveau d'interruption individuelle qui est assigné à chaque unité de commande entrée/sortie (4) en fonction d'une commande qui provient de l'unité de commande centrale.

10. Unité de commande de canal selon la revendication 6, dans laquelle ladite pseudo-unité de commande d'entrée/sortie (9) peut envoyer des données d'erreur de parité en fonction d'une commande qui provient de ladite unité de commande centrale (1) et simuler le fonctionnement pendant un délai d'attente d'occupation du bus commun.

**Ansprüche**

1. Automatisches diagnostisches Verfahren für eine Vielzahl von Kanalsteuereinheiten (30-33), wobei jede Kanalsteuereinheit (30-33) mindestens eine Eingangs-/Ausgangseinheit ($5_{00}$, ..., $5_{3n}$) durch eine Eingangs-/Ausgangssteuereinheit ($4_{00}$, ..., $4_{3n}$) steuert, die mit der Kanalsteuereinheit durch eine gemeinsame Sammelschiene in Reihe geschaltet ist, und wobei die Eingangs-/Ausgangssteuereinheit ($4_{00}$, ..., $4_{3n}$) entsprechend vorbestimmten gemeinsamen Sammelschienensteuervorgängen durch Empfangen eines Befehls von einer zentralen Steuereinheit (1) gesteuert wird, **gekennzeichnet** durch:
   - automatisches Verbinden einer Pseudo-Eingangs/Ausgangs-Steuereinheit (9) innerhalb jeder Kanalsteuereinheit (30-33) mit der gemeinsamen Sammelschiene in Fällen, bei denen die zentrale Steuereinheit (1) einen Fehler innerhalb der Kanalsteuereinheit (30-33) oder innerhalb der geeigneten Eingangs-/Ausgangssteuereinheiten ($4_{00}$, ..., $4_{3n}$) erfaßt;
   - Durchführen von automatischen diagnostischen Prozeduren für jede der individuellen Arten von Eingangs-/Ausgangssteuereinheiten ($4_{00}$, ..., $4_{3n}$) mittels der Pseudo-Eingangs-/Ausgangssteuereinheit (9) zum Simulieren von Operationen der geeigneten Eingangs-/Ausgangssteuereinheiten ($4_{00}$, ..., $4_{3n}$);
   - Informieren der zentralen Steuereinheit (1) in dem Falle, bei dem normale Funktion der Kanalsteuereinheit (30-33) erfaßt wird; und
   - Kennzeichnen der zu reparierenden Kanalsteuereinheit (30-33) in dem Falle, bei dem abnormale Funktion der Kanalsteuereinheit (30-33) erfaßt wird.

2. Automatisches diagnostisches Verfahren für eine Kanalsteuereinheit nach Anspruch 1, dadurch **gekennzeichnet,** daß die Pseudo-Eingangs-/Ausgangssteuereinheit (9) durch automatische Trenn-/Verbindungsmittel entsprechend einem Befehl der zentralen Steuereinheit (1) automatisch getrennt/verbunden wird.

3. Automatisches diagnostisches Verfahren für eine Kanalsteuereinheit nach Anspruch 1, dadurch **gekennzeichnet,** daß eine individuelle Adresse jeder Eingangs-/Ausgangssteuereinheit (4) auf die gewünschte Adresse durch die Pseudo-Eingangs-/Ausgangssteuereinheit (9) entsprechend dem Empfang eines Befehls von der zentralen Steuereinheit (1) eingestellt wird.

4. Automatisches diagnostisches Verfahren für eine Kanalsteuereinheit nach Anspruch 1, dadurch **gekennzeichnet,** daß ein Unterbrechungspegel an der zentralen Steuereinheit (1) durch die Pseudo-Eingangs-/Ausgangssteuereinheit (9) auf einen individuellen Unterbrechungspegel eingestellt wird, der in jeder Eingangs-/Ausgangssteuereinheit (4) entsprechend einem Befehl von der zentralen Steuereinheit (1) zugeordnet ist.

5. Automatisches diagnostisches Verfahren für eine Kanalsteuereinheit nach Anspruch 1, dadurch **gekennzeichnet,** daß ein Paritätsfehlerdatum durch die Pseudo-Eingangs-/Ausgangssteuereinheit (9) entsprechend einem Befehl von der zentralen Steuereinheit (1) gesendet wird und die Operation für eine gemeinsame-Sammelschienen-Inanspruchnahmeunterbrechung simuliert.

6. Kanalsteuereinheit (30-33) zum Steuern wenigstens einer Eingangs-/Ausgangssteuereinheit ($4_{00}$, ----, $4_{3n}$), die mit der Kanalsteuereinheit (30-33) durch eine gemeinsame Sammelschiene in Reihe geschaltet ist, wobei die Eingangs-/Ausgangssteuereinheiten ($4_{00}$, ----, $4_{3n}$) entsprechend vorbestimmten gemeinsamen Sammelschienensteuerprozeduren durch Empfangen eines Befehls von einer zentralen Steuereinheit (1) gesteuert werden, **gekennzeichnet** durch:

- eine sich innerhalb jeder Kanalsteuereinheit (30-33) befindliche Pseudo-Eingangs-/Ausgangssteuereinheit (9), die mit der gemeinsamen Sammelschiene in Fällen automatisch verbunden ist, bei denen die zentrale Steuereinheit (1) einen Fehler innerhalb der Kanalsteuereinheit (30-33) oder innerhalb der geeigneten Eingangs-/Ausgangssteuereinheiten ($4_{00}$, ----, $4_{3n}$) erfaßt;
- Mittel zum Durchführen von automatischen diagnostischen Prozeduren jeder der individuellen Arten von Eingangs-/Ausgangssteuereinheiten ($4_{00}$, ----, $4_{3n}$) mittels der Pseudo-Eingangs-/Ausgangssteuereinheit (9) zum Simulieren von Operationen der geeigneten Eingangs-/Ausgangssteuereinheiten ($4_{00}$, ----, $4_{3n}$);
- Mittel zum Informieren der zentralen Steuereinheit (1) in dem Falle, bei dem normale Funktion der Kanalsteuereinheit (30-33) erfaßt wird; und
- Mittel zum Kennzeichnen der zu reparierenden Kanalsteuereinheit (30-33) in dem Falle, bei dem abnormale Funktion der Kanalsteuereinheit (30-33) erfaßt wird.

7. Kanalsteuereinheit nach Anspruch 6, dadurch **gekennzeichnet,** daß automatische Trenn-/Verbindungsmittel vorgesehen sind, um die gemeinsame Sammelschiene entsprechend einem Befehl der zentralen Steuereinheit (1) automatisch zu trennen/verbinden.

8. Kanalsteuereinheit nach Anspruch 6, dadurch **gekennzeichnet**, daß die Pseudo-Eingangs-/Ausgangssteuereinheit (9) zum Einstellen einer individuellen Adresse jeder Eingangs-/Ausgangssteuereinheit (4) auf die gewünschte Adresse entsprechend einem Befehl von der zentralen Steuereinheit (1) befähigt ist.

9. Kanalsteuereinheit nach Anspruch 6, dadurch **gekennzeichnet**, daß die Pseudo-Eingangs-/Ausgangssteuereinheit (9) zum Einstellen eines Unterbrechungspegels an die zentrale Steuereinheit (1) auf den individuellen Unterbrechungspegel befähigt ist, der in jeder Eingangs-/Ausgangssteuereinheit (4) entsprechend einem Befehl von der zentralen Steuereinheit zugeordnet ist.

10. Kanalsteuereinheit nach Anspruch 6, dadurch **gekennzeichnet,** daß die Pseudo-Eingangs-/Ausgangssteuereinheit (9) zum Senden eines Paritätsfehlerdatums entsprechend einem Befehl von der zentralen Steuereinheit (1) und zum Simulieren der Operation für gemeinsame-Sammelschienen-Inanspruchnahmeunterbrechung befähigt ist.

# FIG.1

# FIG.2

FIG.3

# FIG.4

EP 0 169 244 B1

# FIG.5

EP 0 169 244 B1

# FIG.6

S 100 — Detection of System Failure

S101 — Analysis of Failure

--- Failure of CHC/IOC

Failure of Other Unit

S102 — CHC Exhaustion Processing Request

S103 — Common Bus Holding

S104 — CHC — PIO Connection

S105 — Diagnosis of CHC Using PIO in the CHC

S106 — GooD / No GooD

No GooD

GooD

S107 — PIO Holding, CB Connection

S109 — Repair of CHC

S108 — Restoration of CHC Exhaustion Processing Request

Diagnosis of IOCn